# DEMANDE DE BREVET EUROPEEN

(11) **EP 0 776 114 A2**
(43) Date de publication de la demande: **28.05.1997**
(21) Numéro de dépôt: 96203172.0
(22) Date de dépôt: 13.11.1996
(51) Int. Cl.: H04M 1/60

(54) **Appareil téléphonique avec volume réglable en fonction de bruit ambiant**

(30) Priorité: 22.11.1995 FR 9513866
(71) Demandeur: LABORATOIRES D'ELECTRONIQUE PHILIPS S.A.S., 94450 Limeil-Brévannes (FR); Philips Electronics N.V., 5621 BA Eindhoven (NL)
(72) Inventeur: Boyer, Jean-Philippe, 75008 Paris (FR)
(74) Mandataire: Landousy, Christian

(57) **Abrégé**

L'appareil téléphonique comporte des moyens d'émission (M, 131, 132) permettant à un locuteur d'émettre un message vocal aller vers un correspondant, des moyens de réception (E, 132, 133) permettant au locuteur de recevoir un message vocal retour en provenance du correspondant et des moyens (11, 12, 16) permettant d'adapter le volume sonore du message vocal retour délivré au locuteur par les moyens de réception, en fonction d'un volume sonore de bruit ambiant perçu localement par le locuteur.

Les moyens pour adapter comportent une section (14, 15) à logique floue qui reçoit des mesures le bruit de souffle provoqué par le locuteur et des mesures caractéristiques du signal de parole et du bruit ambiant, lesdits moyens délivrant un signal de commande (COM) pour contrôler le volume sonore du message vocal retour délivré au locuteur.

Application: Appareils téléphoniques.

## Description

L'invention concerne un appareil téléphonique comportant des moyens d'émission permettant à un locuteur d'émettre un message vocal aller vers un correspondant et des moyens de réception permettant au locuteur de recevoir un message vocal retour en provenance du correspondant.

L'objet d'un appareil téléphonique est de permettre le transport de la parole à distance à l'aide de signaux électriques. A l'émission, l'appareil téléphonique effectue la transformation de signaux acoustiques en signaux électriques. A la réception, l'appareil téléphonique effectue la transformation de signaux électriques en signaux acoustiques. La structure d'un appareil téléphonique est bien connue. Elle comporte des organes transducteurs pour transformer l'énergie acoustique en énergie électrique et inversement, des organes d'adaptation à la ligne de transmission et des organes de signalisation et de numérotation. Ces organes sont répartis entre un combiné et un poste de base. Généralement le combiné comprend les transducteurs, c'est-à-dire un microphone et un écouteur, et le poste de base comprend les autres organes.

La mise en communication de deux abonnés (nommés ci-après un locuteur et un correspondant) comporte une phase de signalisation et une phase de conversation proprement dite. Au cours d'une conversation, le locuteur peut s'exprimer dans un environnement sonore plus ou moins bruité. Ce bruit est alors transmis au correspondant par la voie téléphonique et vient gêner le correspondant. Différentes techniques pour éliminer le bruit ambiant du signal à transmettre ont été décrites, par exemple dans le document intitulé: "Frequency domain noise suppression approaches in mobile telephone systems", Jin Yang, IEEE International Conference on Acoustics, Speech and Signal Processing, Minneapolis, Avril 27-30, 1993. Mais ceci ne résout pas le problème du locuteur gêné par le bruit ambiant qui l'entoure. En effet, lorsque le locuteur reçoit les paroles émises par son correspondant, si le bruit qui environne le locuteur devient élevé, le locuteur peut éprouver des difficultés à comprendre les paroles de son correspondant.

Le but de l'invention est de permettre au locuteur de mieux comprendre les paroles de son correspondant même lorsque le bruit qui environne le locuteur devient élevé.

Ce but est atteint avec un appareil téléphonique qui comporte des moyens pour adapter un volume sonore du message vocal retour délivré au locuteur par les moyens de réception, en fonction d'un volume sonore de bruit ambiant perçu localement par le locuteur.

Pour effectuer cette adaptation, l'appareil téléphonique détecte les moments au cours desquels le locuteur s'exprime en détectant, d'une part, un effet de souffle engendré par la faible distance qui sépare habituellement la bouche du locuteur du microphone et, d'autre part, en détectant la présence de bouffées de paroles qui caractérisent toute conversation. Le niveau de bruit entourant le locuteur est également détecté. De cette manière, il est possible de déterminer les moments durant lesquels le locuteur s'exprime et les moments durant lesquels il ne s'exprime pas, c'est-à-dire au cours desquels le correspondant a toutes les chances de s'exprimer. Lorsque le locuteur ne s exprime pas, les moyens d'adaptation mesurent le volume sonore du bruit environnant le locuteur et adaptent en conséquence le volume sonore du message vocal du correspondant restitué au locuteur. Toutes ces informations sont traitées en combinaison dans une ou plusieurs unités à logique floue qui fournissent un signal de commande qui contrôle le signal du message vocal transmis à l'écouteur.

Pour cela les moyens pour adapter le volume sonore comportent:
- une première section délivrant un premier signal caractérisant un bruit de souffle produit par le locuteur en s'exprimant dans les moyens d'émission,
- une seconde section délivrant d'une part un second signal caractérisant un niveau de bruit entourant le locuteur et d'autre part un troisième signal caractérisant une apparition/interruption du message vocal du locuteur,
- une troisième section à logique floue qui reçoit les premier, second et troisième signaux, la troisième section délivrant un signal de commande au moyens de réception pour adapter, au cours d'interruptions du message vocal du locuteur, le message vocal du correspondant restitué au locuteur en fonction du volume sonore de bruit ambiant perçu localement par le locuteur.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent:
Figure 1 : un schéma général d'un appareil téléphonique connu.
Figure 2 : un schéma d'un appareil téléphonique selon l'invention.
Figure 3 : un schéma d'un étage de détection sélective d'une énergie sonore.
Figure 4 : un schéma de principe d'un contrôleur à logique floue.
Figure 5 : une représentation d'exemples d'ensembles flous.

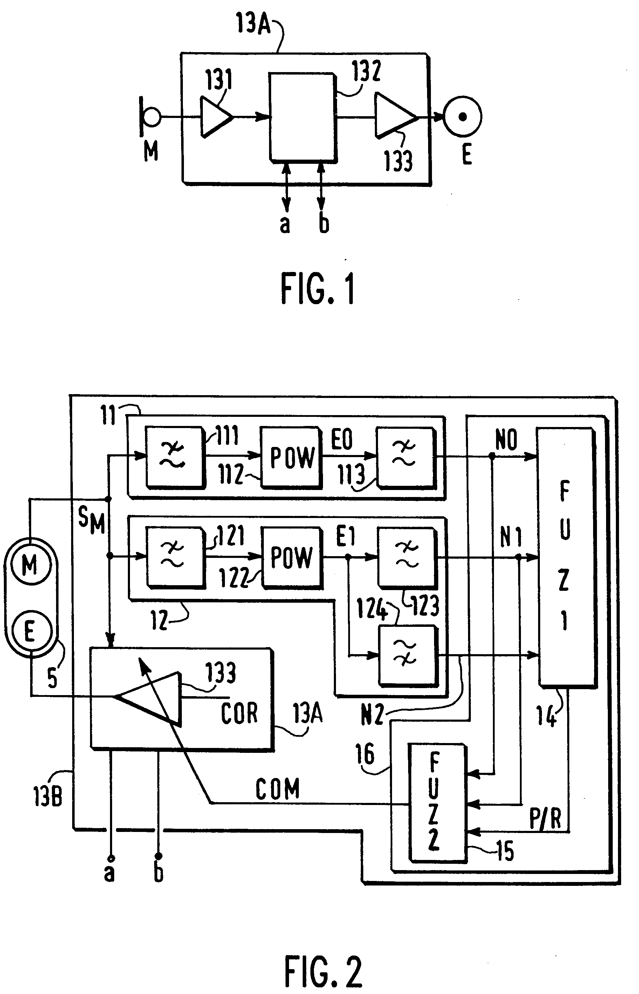

La figure 1 représente un appareil téléphonique comprenant un microphone M, un écouteur E et un poste de base 13A relié à une ligne de transmission ab. Généralement différents moyens de fonctionnement sont centralisés dans le poste de base 13A. Celui-ci va comporter dans une sous-unité 132, notamment des organes de prise de ligne, des circuits d'interface pour assurer les communications bidirectionnelles, des organes de sonnerie et de numérotation. Le signal électrique délivré par le microphone M est amplifié par un amplificateur 131. Le signal électrique se rapportant au message vocal retour provenant du correspondant est amplifié dans un amplificateur 133 pour être fourni à l'écouteur E.

La figure 2 représente un appareil téléphonique comportant l'invention. Le microphone M et l'écouteur E sont ici regroupés dans un combiné 5. Le poste de base 13B comporte les organes du poste de base 13A déjà décrits auxquels sont ajoutés ceux de l'invention. Pour mettre en oeuvre l'invention, le signal électrique S_{M} issu du microphone, éventuellement amplifié, est traité séparément par deux sections pour analyser la composition et l'évolution du message vocal du locuteur. Le signal S_{M} entre, d'une part, dans une première section 11 qui mesure l'effet de souffle produit par les paroles du locuteur dans le microphone, et, d'autre part, dans une seconde section 12 qui mesure l'apparition ou l'interruption des paroles du locuteur ainsi que le niveau de bruit environnant le locuteur.

La première section comporte en série un filtre passebas 111 qui élimine les composantes haute-fréquence du signal délivré par le microphone et ne conserve que les composantes à très basse fréquence (par exemple une bande passante de 10 Hz à 100 Hz environ). Un circuit POW 112 mesure, sur une durée d'analyse donnée, l'énergie E0 du signal filtré délivré par le filtre 111. Le signal d'énergie E0 est à son tour filtré pour en éliminer les composantes haute-fréquence à l'aide d'un filtre 113 qui délivre un signal N0 caractérisant l'effet de souffle produit par les paroles du locuteur dans le microphone.

La seconde section comporte en série un filtre passe-bande 121 (par exemple une bande passante de 200 Hz à 1 kHz environ) qui mesure le niveau de bruit en conservant les composantes à fréquences vocales contenues dans le signal délivré par le microphone. Un circuit POW 122 mesure, sur une durée d'analyse donnée, l'énergie E1 du signal filtré délivré par le filtre 121. Le signal d'énergie E1 est à son tour filtré pour en éliminer les composantes haute-fréquence à l'aide d'un filtre 123 qui délivre un signal N1 caractérisant le niveau de bruit entourant le locuteur.

Le signal d'énergie E1 est également filtré par un filtre 124 passe-haut qui détecte des transitions du signal d'énergie E1 pour détecter les instants d'apparition ou d'interruption du message vocal du locuteur. Le filtre 124 délivre un signal N2 qui représente les transitions du signal S_{M} dans le domaine temporel caractérisant des bouffées de paroles.

Il est possible de subdiviser en plusieurs sous-bandes de fréquence, la bande passante traitée par la seconde section pour discriminer un niveau de bruit dans chaque sous-bande de fréquences. Les moyens de la seconde section sont alors dupliqués.

Les signaux N0, N1 et N2 entrent dans une unité à logique floue 16 formée d'une sous-unité 14 FUZ1 et d'une sous-unité 15 FUZ2. A chaque durée d'analyse, la sous-unité FUZ1 délivre un signal binaire P/R dont l'état logique indique s'il s'est agi d'un signal de parole du locuteur (P/R=1) ou s'il ne s'est pas agi d'un signal de parole du locuteur (P/R=0). Dans ce second cas, selon l'invention, on considère premièrement qu'il s'agit du temps de parole du correspondant, et deuxièmement, que le microphone M détecte le volume sonore de bruit ambiant environnant le locuteur. Il peut s'agir de bruits de toute nature et notamment de conversations tenues à proximité du locuteur. Néanmoins, en prenant en compte l'effet de souffle produit ou non produit par le locuteur, les moyens d'adaptation différencient la parole du locuteur de conversations tenues près de lui par d'autres personnes. Les données d'effet de souffle contenues dans le signal N0 sont combinées avec le signal N1 et avec le signal P/R dans la sous- unité à logique floue 15 FUZ2 pour obtenir un signal de commande COM. La sous-unité FUZ2 peut prendre en compte la fréquence du basculement du signal P/R. Le volume du message vocal COR du correspondant qui arrive à travers la ligne ab est alors adapté en fonction du volume sonore du bruit ambiant perçu localement par le locuteur. On utilise pour cela un amplificateur variable 133, commandé par le signal de commande COM, pour contrôler le niveau du signal électrique fourni à l'écouteur. Le signal de commande COM est adapté à partir des absences de paroles du locuteur. Lorsque le locuteur parle, préférentiellement le signal de commande issu du réglage précédent reste inchangé.

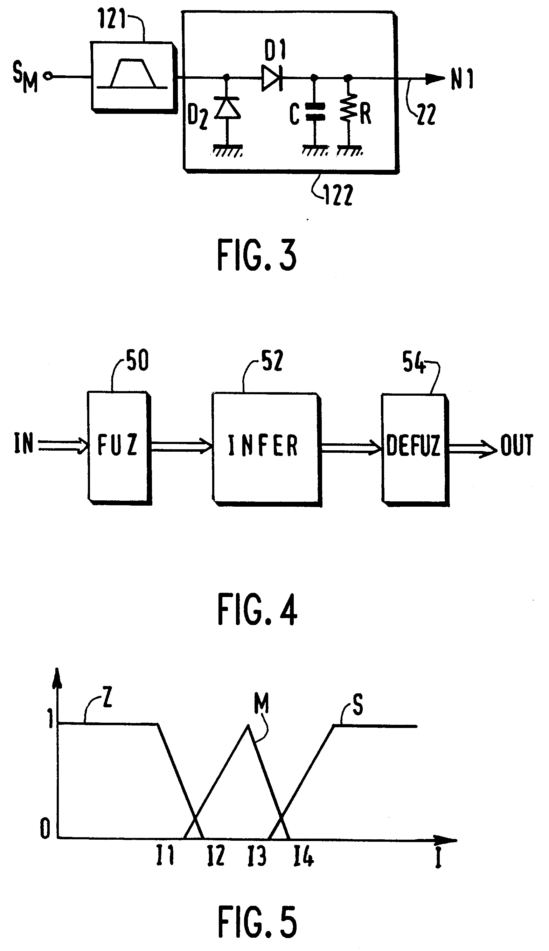

La figure 3 représente un circuit 122 de mesure de l'énergie d'un signal, par exemple le signal en sortie du filtre 121. Le circuit 122 comprend une diode D1 connectée en direct entre la sortie du filtre 121 et une sortie 22 du circuit 122, une diode D2 connectée en inverse entre la sortie du filtre 121 et un potentiel de référence (la masse), une cellule d'intégration formée d'une capacité C en parallèle avec une résistance R connectée entre la sortie 22 et le potentiel de référence (masse). Le signal N1 sur la sortie 22 représente la mesure de l'énergie du signal d'entrée S_{M} dans la gamme de fréquences sélectionnée par le filtre 121 c'est-à-dire le niveau de bruit lorsque le locuteur ne s'exprime pas. Tout autre montage remplissant la même fonction convient.

Les figures 4 et 5 fournissent un simple rappel des principes essentiels de la logique floue.

Les opérations fondamentales connues de logique floue sont schématisées sur la figure 4 où on a représenté un module 50 FUZ qui effectue une fuzzification du signal d'entrée IN, un module INFER 52 qui applique des règles d'inférence et un module DEFUZ 54 qui effectue une défuzzification des données et qui délivre un signal OUT. Ces opérations sont réalisées dans les sous-unités FUZ1 et FUZ2 de l'invention.

La figure 5 constitue un exemple d'ensembles flous se rapportant à une variable, par exemple le signal N1 mesurant le niveau de bruit entourant le locuteur. On définit les ensembles flous suivants (où I est une variable courante d'entrée):
- ensemble Z de signal de bruit nul lorsque I < I2,
- ensemble M de signal de bruit moyen lorsque I1 <I < I4,
- ensemble S de signal de bruit fort lorsque I > I3.

Toutes les composantes N0, N1 et N2 sont ainsi traduites de la même manière en ensembles flous qui sont stockés dans l'unité FUZ1. On y stocke également des règles d'inférences du type:

SI N0 est moyen et SI N1 est fort et SI N2 est moyen, ALORS P/R est égal à 1.

Dans le mode utilisation, une donnée courante d'entrée I = N0, N1 ou N2 pourra appartenir à un ou plusieurs ensembles flous selon plusieurs degrés d'appartenance. Les règles d'inférence précédentes sont ensuite appliquées à ces données pour en déduire à chaque fois une déduction relative au signal P/R. De toutes les déductions on extrait un signal P/R compatible avec toutes les déductions. Cette dernière opération est appelée défuzzyfication.

La seconde unité FUZ2 opère de manière analogue sur les signaux P/R, N0 et N1. La sortie de l'unité FUZ2 délivre le signal de commande COM qui règle l'amplificateur 133 pour ajuster le volume sonore délivré par l'écouteur.

## Revendications

1. Appareil téléphonique comportant des moyens d'émission (M, 131, 132) permettant à un locuteur d'émettre un message vocal aller vers un correspondant et des moyens de réception (E, 132, 133) permettant au locuteur de recevoir un message vocal retour en provenance du correspondant caractérisé en ce que l'appareil comporte des moyens (11, 12, 14, 15) pour adapter un volume sonore du message vocal retour délivré au locuteur par les moyens de réception, en fonction d'un volume sonore de bruit ambiant perçu localement par le locuteur.

2. Appareil selon la revendication 1 caractérisé en ce que les moyens pour adapter le volume sonore comportent:
- une première section (11) délivrant un premier signal (N0) caractérisant un bruit de souffle produit par le locuteur en s'exprimant dans les moyens d'émission (E),
- une seconde section (12) délivrant d'une part un second signal (N1) caractérisant un niveau de bruit entourant le locuteur et d'autre part un troisième signal (N2) caractérisant une apparition/interruption du message vocal du locuteur,
- une troisième section à logique floue (16) qui reçoit les premier, second et troisième signaux, la troisième section délivrant un signal de commande (COM) aux moyens de réception pour adapter, au cours d'interruptions du message vocal du locuteur, le message vocal du correspondant restitué au locuteur en fonction du volume sonore de bruit ambiant perçu localement par le locuteur.
